# FASCICULE DE BREVET EUROPEEN

(11) **EP 3 230 097 B1**
(45) Date de publication et mention de la délivrance du brevet: **02.09.2020**
(21) Numéro de dépôt: 15798442.8
(22) Date de dépôt: 24.11.2015
(51) Int. Cl.: B60H 1/00

(54) **DISPOSITIF DE CLIMATISATION POUR VEHICULE AUTOMOBILE**
KLIMAANLAGENVORRICHTUNG FÜR EIN KRAFTFAHRZEUG
AIR-CONDITIONING DEVICE FOR A MOTOR VEHICLE

(30) Priorité: 10.12.2014 FR 1462185
(43) Date de publication de la demande: 18.10.2017
(73) Titulaire: Valeo Systemes Thermiques, 78320 Le Mesnil Saint Denis (FR)
(72) Inventeur: JOVET, Bastien, 78322 Le Mesnil Saint-Denis cédex (FR); AILLOUD, Fabrice, 78322 Le Mesnil Saint-Denis cédex (FR); LADRECH, Frédéric, 78322 Le Mesnil Saint-Denis cédex (FR); PIERRES, Philippe, 78322 Le Mesnil Saint-Denis cédex (FR)
(74) Mandataire: Tran, Chi-Hai
(86) Numéro de dépôt international: PCT/EP2015/077456
(87) Numéro de publication internationale: WO 2016/091579

(56) Documents cités:
- EP-A1- 1 510 375
- DE-A1- 19 741 862
- DE-A1-102012 018 537

## Description

La présente invention concerne un dispositif de climatisation pour véhicule automobile.

Les véhicules automobiles sont des lieux clos de faible volume, soumis à des environnements changeants et souvent rigoureux. Il est donc indispensable d'y renouveler régulièrement l'air, et d'en réguler la température.

On utilise à cet effet des dispositifs de climatisation, ou climatiseurs. Ces systèmes sont conçus de façon à ce que de l'air chauffé ou refroidi soit soufflé à l'intérieur du véhicule.

Les dispositifs de climatisation pour véhicule automobile, en particulier les systèmes HVAC (Heating, Ventilation and Air Conditioning en langue anglaise) comportent généralement un circuit d'air entre au moins une bouche d'admission et au moins une bouche d'évacuation, sur lequel sont interposés divers moyens de traitement de l'air. La bouche d'admission d'air est une entrée d'air extérieur et/ou une entrée d'air recyclé. Les moyens de traitement de l'air sont notamment des moyens de ventilation pour mettre en mouvement un flux d'air à travers le circuit, des moyens de chauffage et/ou de refroidissement, comme par exemple un radiateur de chauffage d'air et un évaporateur destiné à refroidir l'air.

Ces dispositifs de climatisation, tels que décrits par exemple dans le document FR 2 788 021, comprennent typiquement un circuit de dérivation permettant à une partie de l'air de ne pas traverser l'évaporateur. Le circuit de dérivation entraîne notamment un gain d'énergie dans le climatiseur.

On notera également que le document EP 1 510 375 A1 divulgue un dispositif de climatisation avec un circuit de dérivation.

L'invention propose un dispositif de climatisation muni d'un tel circuit de dérivation et qui est compact. Cette compacité est particulièrement recherchée pour les climatiseurs en architecture centrée, situés au niveau de la console centrale du véhicule automobile.

L'invention a ainsi pour objet un dispositif de climatisation de climatisation pour véhicule automobile, comprenant un élément de mise en circulation d'air en direction d'un évaporateur. Le dispositif selon l'invention comprend en outre un circuit de dérivation permettant une circulation d'air entre une zone située en amont de l'évaporateur et une zone située en aval de l'évaporateur, le circuit de dérivation d'air étant disposé au-dessus de l'évaporateur.

De plus, l'élément de mise en circulation d'air du dispositif selon l'invention comprend une enveloppe centrifuge de canalisation d'air, appelée volute.

En outre, le circuit de dérivation d'air du dispositif selon l'invention comprend deux conduits situés de part et d'autre de la volute.

De manière préférentielle, l'enveloppe centrifuge est disposée au-dessus de l'évaporateur.

Le circuit de dérivation d'air est préférentiellement disposé à côté de la volute.

Ainsi, cette disposition spécifique du circuit de dérivation, au-dessus de l'évaporateur et à côté de la volute, et non pas entre la volute et l'évaporateur, permet de ne pas augmenter le volume du dispositif et de ne pas réduire la taille de la volute.

L'élément de mise en circulation d'air comprend un moteur actionnant une roue située à l'intérieur de la volute.

Le circuit de dérivation d'air peut comprendre un conduit situé sous le moteur de l'élément de mise en circulation d'air et un conduit situé sous une zone d'entrée d'air du dispositif.

Le circuit de dérivation peut être délimité par au moins une partie de la paroi de la volute, ce qui permet avantageusement de réduire l'encombrement du dispositif selon l'invention.

Le conduit situé sous le moteur de l'élément de mise en circulation d'air est avantageusement muni d'une zone amovible.

Le degré d'ouverture des conduits de dérivation peut être contrôlé par un volet comprenant deux parties destinées à recouvrir chacune un conduit de dérivation.

Selon une variante, les deux parties du volet sont reliées entre elles par un axe qui est situé à une hauteur intermédiaire entre l'extrémité inférieure et l'extrémité supérieure du volet qui est préférentiellement de type papillon. Plus précisément, lorsque chaque extrémité de cet axe est reliée à un bord d'une partie respective du volet, l'extrémité de l'axe se trouve à distance des extrémités dudit bord auquel l'axe est relié.

Selon une autre variante, le degré d'ouverture des conduits de dérivation peut aussi être contrôlé par un volet, préférentiellement de type drapeau, ledit volet comprenant deux parties destinées à recouvrir chacune un conduit de dérivation, les deux parties du volet étant reliées entre elles par un axe. Préférentiellement, ledit axe est relié auxdites parties du volet au niveau de leur extrémité supérieure ou inférieure. Plus précisément, lorsque chaque extrémité de cet axe est reliée à un bord d'une partie respective du volet, l'extrémité de l'axe se trouve reliée à la partie correspondante du volet au niveau de l'une des extrémités dudit bord auquel l'axe est relié.

Enfin, selon une autre variante, le degré d'ouverture des conduits de dérivation peut être contrôlé par un volet, préférentiellement de type tambour, ledit volet comprenant deux parties destinées à recouvrir chacune un conduit de dérivation, chaque partie présentant une section en arc de cercle.

L'évaporateur est avantageusement plus large que la volute.

D'autres avantages et caractéristiques de l'invention apparaîtront à la lecture de la description suivante, donnée uniquement à titre d'exemple non limitatif, et faite en référence aux dessins annexés sur lesquels :
- la figure 1 est une vue latérale d'un dispositif de climatisation selon l'invention,
- la figure 2 est une vue de détail de la figure 1,
- la figure 3 est une vue selon la coupe A-A du dispositif de la figure 1,
- les figures 4 et 5 sont des vues partielles du dispositif.

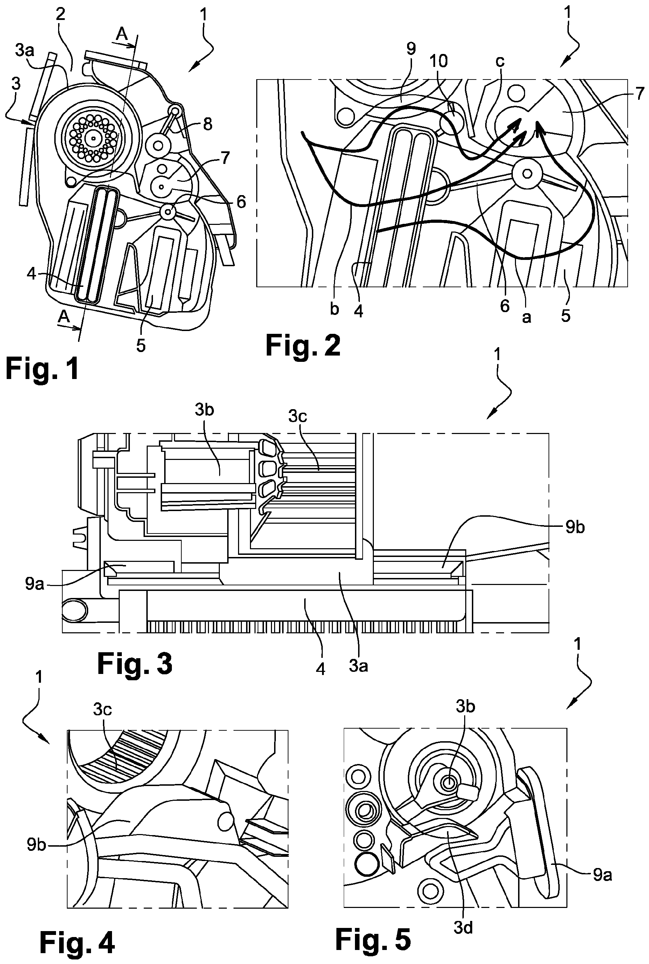

Tel qu'illustré aux figures 1 à 3, un dispositif de climatisation 1 selon l'invention comprend un circuit d'air à partir d'au moins une bouche d'entrée 2 à travers laquelle est admis de l'air. La bouche d'entrée 2 est l'entrée d'air extérieur ou l'entrée d'air recyclé. Le circuit d'air comprend notamment un élément de mise en circulation d'air tel qu'un pulseur d'air 3, apte à mettre en circulation l'air issu de la bouche d'entrée 2, vers une zone de traitement thermique qui comprend un évaporateur 4 et un radiateur 5. Le pulseur 3 est muni d'un moteur 3b qui entraîne une roue 3c située à l'intérieur d'une enveloppe 3a. L'enveloppe 3a est une enveloppe centrifuge de canalisation d'air appelée volute. La volute 3a est disposée au-dessus de l'évaporateur 4, elle est par exemple posée sur l'évaporateur 4 ou disposée à proximité de l'évaporateur 4. La volute 3a est de préférence moins large que l'évaporateur 4.

L'évaporateur 4 est un échangeur thermique. Son rôle consiste à absorber le flux thermique provenant de l'air à refroidir. L'évaporateur 4 comprend ainsi un fluide frigorigène liquide qui est vaporisé par la chaleur extraite de l'air à refroidir. Le radiateur 5 est quant à lui un échangeur dans lequel le réfrigérant passe de l'état gazeux à l'état liquide en cédant sa chaleur à l'air extérieur.

Différents volets 6, 7, 8 permettent d'orienter l'air suivant plusieurs directions. Un premier volet de mixage 6 permet de répartir le flux d'air qui a traversé l'évaporateur 4 vers le radiateur 5 (chemin illustré sur la figure 2 par la flèche a) et/ou vers un chemin qui contourne le radiateur 5 (chemin illustré sur la figure 2 par la flèche b). Un deuxième volet 7, par exemple un volet tambour, répartit l'air entre une sortie d'air centrale vers les aérateurs de la console centrale, et une sortie d'air inférieure en direction des pieds du conducteur. Un troisième volet 8 permet de répartir l'air entre la sortie d'air centrale et une sortie d'air supérieure en direction du pare-brise du véhicule.

En outre, conformément à l'invention, le dispositif de climatisation comprend un circuit de dérivation 9 permettant à une partie de l'air de ne pas traverser l'évaporateur 4. Le passage de l'air empruntant ce circuit de dérivation est représenté sur la figure 2 par la flèche c.

Le circuit de dérivation 9 peut comprendre deux conduits de dérivation 9a et 9b, qui sont tous deux disposés au-dessus de l'évaporateur 4, éventuellement en contact avec celui-ci, et de part et d'autre de la volute 3a, c'est-à-dire que les conduits 9a, 9b sont alignés horizontalement au-dessus de l'évaporateur 4. La volute 3a est en contact ou à proximité immédiate de l'évaporateur 4. On peut ainsi intégrer un circuit de dérivation 9a, 9b dans le dispositif de climatisation 1, et ce sans réduction du volume de la volute 3a, ce qui permet de conserver de bonnes performances aérauliques et acoustiques. En outre, il n'est pas nécessaire de déplacer la volute 3a vers le haut pour intégrer le circuit de dérivation 9a, 9b.

Le degré d'ouverture des conduits de dérivation 9a, 9b est contrôlé par un volet de contournement 10, qui est par exemple un volet papillon (figure 2). Le volet 10 peut également être un volet de type drapeau, dans lequel l'axe du volet est situé à l'extrémité inférieure ou supérieure du volet 10. Un volet drapeau permet un gain en section dans les conduits de dérivation 9a, 9b. Le volet 10 peut également être un volet de type tambour, comme le deuxième volet 7.

La figure 4 illustre le conduit de dérivation 9b qui est situé à proximité de la roue 3c et sous une zone d'entrée d'air du dispositif de climatisation 1. L'autre conduit de dérivation 9a, qui est situé sous le moteur 3b du pulseur d'air 3, est avantageusement muni d'une partie 3d amovible, de manière à permettre de démonter le groupe moto-ventilateur composé du support moteur, du moteur 3b et de la roue 3c en cas de panne du groupe moto-ventilateur (figure 5).

## Revendications

1. Dispositif de climatisation (1) pour véhicule automobile, comprenant un élément de mise en circulation d'air (3) en direction d'un évaporateur (4), **caractérisé en ce que** le dispositif (1) comprend en outre un circuit de dérivation (9) permettant une circulation d'air entre une zone située en amont de l'évaporateur (4) et une zone située en aval de l'évaporateur (4), le circuit de dérivation d'air (9) étant disposé au-dessus de l'évaporateur (4), l'élément de mise en circulation d'air (3) comprenant une enveloppe centrifuge (3a) de canalisation d'air, appelée volute,
**caractérisé en ce que** le circuit de dérivation d'air (9) comprend deux conduits (9a, 9b) situés de part et d'autre de la volute (3a).

2. Dispositif de climatisation (1) selon la revendication 1, **caractérisé en ce que** l'enveloppe centrifuge (3a) est disposée au-dessus de l'évaporateur (4).

3. Dispositif de climatisation (1) selon l'une des revendications 1 et 2,
**caractérisé en ce que** le circuit de dérivation d'air (9) est disposé à côté de la volute (3a).

4. Dispositif de climatisation (1) selon l'une des revendications 1 à3,
**caractérisé en ce que** l'élément de mise en circulation d'air (3) comprend un moteur (3b) actionnant une roue (3c) située à l'intérieur de la volute (3a).

5. Dispositif de climatisation (1) selon l'une des revendications 1 et 4,
**caractérisé en ce que** le circuit de dérivation d'air (9) comprend un conduit (9a) situé sous le moteur (3b) de l'élément de mise en circulation d'air (3) et un conduit (9b) situé sous une zone d'entrée d'air du dispositif (1).

6. Dispositif (1) selon la revendication 5, **caractérisé en ce que** le conduit (9a) situé sous le moteur (3b) de l'élément de mise en circulation d'air (3) est muni d'une zone amovible (3d).

7. Dispositif (1) selon l'une des revendications 1 à 6, **caractérisé en ce que** le degré d'ouverture des conduits de dérivation (9a, 9b) est contrôlé par un volet (10) comprenant deux parties destinées à recouvrir chacune un conduit de dérivation (9a, 9b).

8. Dispositif (1) selon la revendication 7, **caractérisé en ce que** les deux parties du volet (10) sont reliées entre elles par un axe situé à une hauteur intermédiaire entre l'extrémité inférieure et l'extrémité supérieure du volet (10).

9. Dispositif (1) selon la revendication 7, **caractérisé en ce que** les deux parties du volet (10) sont reliées entre elles par un axe au niveau de leur extrémité supérieure ou inférieure.

10. Dispositif (1) selon la revendication 7, **caractérisé en ce que** les deux parties du volet (10) présentent chacune une section en arc de cercle.

11. Dispositif (1) selon l'une des revendications 1 à 10, **caractérisé en ce que** l'évaporateur (4) est plus large que la volute (3a).

## Patentansprüche

1. Klimatisierungsvorrichtung (1) für ein Kraftfahrzeug, welche ein Element zur Luftströmung (3) in Richtung eines Verdampfers (4) umfasst, **dadurch gekennzeichnet, dass** die Vorrichtung (1) außerdem einen Bypasskanal (9) umfasst, der eine Strömung von Luft zwischen einem stromaufwärts des Verdampfers (4) angeordneten Bereich und einem stromabwärts des Verdampfers (4) angeordneten Bereich ermöglicht, wobei der Luft- Bypasskanal (9) oberhalb des Verdampfers (4) angeordnet ist, wobei das Element zur Luftströmung (3) eine zentrifugale Hülle (3a) zur Kanalisation von Luft umfasst, Spiralgehäuse genannt,
**dadurch gekennzeichnet, dass** der Luft- Bypasskanal (9) zwei Kanäle (9a, 9b) umfasst, die sich beiderseits des Spiralgehäuses (3a) befinden.

2. Klimatisierungsvorrichtung (1) nach Anspruch 1,
**dadurch gekennzeichnet, dass** die zentrifugale Hülle (3a) oberhalb des Verdampfers (4) angeordnet ist.

3. Klimatisierungsvorrichtung (1) nach einem der Ansprüche 1 und 2, **dadurch gekennzeichnet, dass** der Luft- Bypasskanal (9) neben dem Spiralgehäuse (3a) angeordnet ist.

4. Klimatisierungsvorrichtung (1) nach einem der Ansprüche 1 bis 3, **dadurch gekennzeichnet, dass** das Element zur Luftströmung (3) einen Motor (3b) umfasst, der ein Rad (3c) betätigt, das sich im Inneren des Spiralgehäuses (3a) befindet.

5. Klimatisierungsvorrichtung (1) nach einem der Ansprüche 1 und 4, **dadurch gekennzeichnet, dass** der Luft- Bypasskanal (9) einen Kanal (9a), der sich unter dem Motor (3b) des Elements zur Luftströmung (3) befindet, und einen Kanal (9b), der sich unter einem Lufteintrittsbereich der Vorrichtung (1) befindet, umfasst.

6. Vorrichtung (1) nach Anspruch 5, **dadurch gekennzeichnet, dass** der Kanal (9a), der sich unter dem Motor (3b) des Elements zur Luftströmung (3) befindet, mit einem abnehmbaren Bereich (3d) ausgestattet ist.

7. Vorrichtung (1) nach einem der Ansprüche 1 bis 6, **dadurch gekennzeichnet, dass** der Öffnungsgrad der Bypasskanäle (9a, 9b) von einer Klappe (10) gesteuert wird, die zwei Teile umfasst, die dazu bestimmt sind, jeweils einen Bypasskanal (9a, 9b) abzudecken.

8. Vorrichtung (1) nach Anspruch 7, **dadurch gekennzeichnet, dass** die zwei Teile der Klappe (10) durch einen Achsbolzen miteinander verbunden sind, der sich auf einer Zwischenhöhe zwischen dem unteren Ende und dem oberen Ende der Klappe (10) befindet.

9. Vorrichtung (1) nach Anspruch 7, **dadurch gekennzeichnet, dass** die zwei Teile der Klappe (10) durch einen Achsbolzen an ihrem oberen oder unteren Ende miteinander verbunden sind.

10. Vorrichtung (1) nach Anspruch 7, **dadurch gekennzeichnet, dass** die zwei Teile der Klappe (10) jeweils einen kreisbogenförmigen Querschnitt aufweisen.

11. Vorrichtung (1) nach einem der Ansprüche 1 bis 10,
**dadurch gekennzeichnet, dass** der Verdampfer (4) breiter als das Spiralgehäuse (3a) ist.

## Claims

1. Air-conditioning device (1) for a motor vehicle, comprising an element for circulating air (3) towards an evaporator (4), **characterized in that** the device (1) also comprises a bypass circuit (9) allowing a circulation of air between a zone situated upstream of the evaporator (4) and a zone situated downstream of the evaporator (4), the air bypass circuit (9) being disposed above the evaporator (4), the air circulating element (3) comprising a centrifugal enclosure (3a) for channelling air, called volute,
**characterized in that** the air bypass circuit (9) comprises two ducts (9a, 9b) situated on either side of the volute (3a).

2. Air-conditioning device (1) according to Claim 1,
**characterized in that** the centrifugal enclosure (3a) is disposed above the evaporator (4).

3. Air-conditioning device (1) according to either of Claims 1 and 2, **characterized in that** the air bypass circuit (9) is disposed alongside the volute (3a).

4. Air-conditioning device (1) according to one of Claims 1 to 3, **characterized in that** the air circulating element (3) comprises a motor (3b) actuating a wheel (3c) situated inside the volute (3a).

5. Air-conditioning device (1) according to either of Claims 1 and 4, **characterized in that** the air bypass circuit (9) comprises a duct (9a) situated under the motor (3b) of the air circulating element (3) and a duct (9b) situated under an air inlet zone of the device (1).

6. Device (1) according to Claim 5, **characterized in that** the duct (9a) situated under the motor (3b) of the air circulating element (3) is provided with a removable zone (3d).

7. Device (1) according to one of Claims 1 to 6,
**characterized in that** the degree of opening of the bypass ducts (9a, 9b) is controlled by a flap (10) comprising two parts intended to each overlap a bypass duct (9a, 9b).

8. Device (1) according to Claim 7, **characterized in that** the two parts of the flap (10) are linked to one another by an axis situated at an intermediate height between the bottom end and the top end of the flap (10) .

9. Device (1) according to Claim 7, **characterized in that** the two parts of the flap (10) are linked to one another by an axis at their top or bottom end.

10. Device (1) according to Claim 7, **characterized in that** the two parts of the flap (10) each have a section in the form of a circular arc.

11. Device (1) according to one of Claims 1 to 10,
**characterized in that** the evaporator (4) is wider than the volute (3a).
